# EUROPEAN PATENT APPLICATION

(11) **EP 4 152 276 A1**
(43) Date of publication of application: **22.03.2023**
(21) Application number: 22196390.3
(22) Date of filing: 19.09.2022
(51) Int. Cl.: G06V 20/59

(54) **SEAT OCCUPANCY CLASSIFICATION SYSTEM FOR A VEHICLE**

(30) Priority: 21.09.2021 US 202163246607 P
(71) Applicant: Aptiv Technologies Limited, St. Michael, 14004 (BB)
(72) Inventor: FRIEDRICHS, Klaus, 44227 Dortmund (DE); HEIFT, Monika, 58332 Schwelm (DE); REHFELD, Timo, 51109 Köln (DE)
(74) Representative: Samson & Partner Patentanwälte mbB

(57) **Abstract**

A computerized method of determining seat occupancy of a vehicle is presented. The method comprises obtaining an image of a vehicle cabin showing at least one seat of the vehicle, determining objects in the image and assigning objects to the at least one seat, determining probabilities for seat occupancy states of the at least one seat, and determining a seat occupancy state of the at least one seat based on the assigned objects and the probabilities.

## Description

### FIELD

The present disclosure generally relates to safety improvements for vehicles and, in particular, to methods and systems of determining seat occupancy states of persons in vehicles.

### BACKGROUND

Smart vehicles, such as smart cars, smart busses, and the like, significantly improve the safety of passengers. One task in such smart vehicles is seat occupancy detection, which aims at detecting persons, objects, child seats or the like placed on a seat.

Early seat occupancy classification systems were built on weight sensors for detecting weights on seats. More recent seat occupancy classification systems alternatively or additionally process images taken by cameras in the vehicle. Images may help seat-based seat occupancy determination modules to determine a specific occupancy state for each seat in a vehicle.

Since some safety means have to be controlled differently if a seat is occupied or not, there is a need for reliably detecting a seat occupancy state in the vehicle.

### SUMMARY

In this context, methods, systems and computer program products are presented as defined by the independent claims.

More specifically, a computerized method of determining seat occupancy of a vehicle is presented. The method comprises obtaining an image of a vehicle cabin showing at least one seat of the vehicle, determining objects in the image and assigning objects to the at least one seat, determining probabilities for seat occupancy states of the at least one seat, and determining a seat occupancy state of the at least one seat based on the assigned objects and the probabilities.

In embodiments, seat occupancy states comprise types person, child seat, object, and empty seat. In some embodiments, determining probabilities for seat occupancy states comprises determining a bounding box around the seat and classifying the seat occupancy state within the bounding box. In some embodiments, determining objects in the image and assigning objects to the at least one seat comprises analyzing the image for detection of objects and classification of object types and outputting bounding boxes for a detected object over time and a confidence value for the classification of the object type. In further embodiments, determining objects in the image and assigning objects to the at least one seat comprises determining body keypoints and merging the body keypoints to one or more skeleton models and outputting the skeleton models and a confidence score of a skeleton model based on the number of body keypoints and respective confidence values of the body keypoints. In yet further embodiments, determining objects in the image and assigning objects to the at least one seat comprises analyzing the image for detection of faces and outputting tracked bounding boxes for a detected face over time.

In some embodiments, determining objects in the image and assigning objects to the at least one seat comprises aggregating different information of a detected object to a combined object and determining seat assignment probabilities of a combined object to the at least one seat in the vehicle, wherein a seat assignment probability reflects the probability of a detected object being located at a seat.

In some embodiments, determining a seat occupancy state of the at least one seat based on the assigned objects and the probabilities comprises generating seat occupancy states of seats previously being of type person or child seat, generating seat occupancy states of seats previously being of type empty seat by adding newly detected persons and/or child seats, generating seat occupancy states of seats previously being of type object, and generating seat occupancy states of seats previously being of type empty seat by adding newly detected objects.

In further embodiments, generating seat occupancy states of seats previously being of type person or child seat comprises matching previous seat occupancy states of the seats to the seat assignment probabilities for object types person or child seats, comparing, in response to determining an uncertainty in the matching for a seat, the previous seat occupancy state of the seat with the output the seat-based classifier for the seat, and determining confirmed seat states, moved persons and child seats to other seats, and removed persons and child seats based on the matching and/or comparing.

In further embodiments generating seat occupancy states of seats previously being of type object comprises matching previous seat occupancy states of the seats to the seat assignment probabilities for object type object and determining confirmed seat states, moved objects to other seats, and removed objects based on the matching.

In some embodiments, the method further comprises determining an occlusion value for a seat, wherein the occlusion value is considered when generating the current seat occupancy states of the seats. In some embodiments, determining the seat occupancy states of the seats further takes information from at least one vehicle sensor into account.

Another aspect concerns a seat occupancy classification system being adapted to perform the method described herein.

Yet another aspect concerns a vehicle that comprises a camera for taking images of an interior of the vehicle and the seat occupancy classification system as described herein.

Finally, a computer program is presented that comprises instructions which, when the program is executed by a computer, cause the computer to carry out the methods described herein.

These and other objects, embodiments and advantages will become readily apparent to those skilled in the art from the following detailed description of the embodiments having reference to the attached figures, the disclosure not being limited to any particular embodiments.

### BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 is a basic flow chart of the method disclosed herein.
Fig. 2 depicts bounding boxes used by an exemplary seat-based classifier.
Fig. 3A shows bounding boxes generated by an exemplary object detector.
Fig. 3B shows skeleton models of keypoints generated by an exemplary body keypoint module.
Fig. 3C shows bounding boxes generated by an exemplary face detector.
Fig. 4 is a flow chart of an embodiment of determining and assigning objects according to the method disclosed herein.
Fig. 5 is a flow chart of an embodiment of fusing different information to generate seat occupancy states.
Figs. 6A, 6B, 6C, and 6D illustrate possible seat occupancy states.
Fig. 7 presents an overview on an exemplary overall seat occupancy classification system.
Fig. 8 depicts a flow chart of how to determine seat occupancy states for a detected person.
Figs. 9A and 9B present flow charts of how to add a person or child seat as occupancy states.
Fig. 10 is diagrammatic representation of a computing system implementing the functionalities described herein.

### DETAILED DESCRIPTION

The present disclosure relates to methods and systems of seat occupancy detection that improves the safety of smart vehicles, such as cars, trains, busses, ships, and the like. Before referring to the Figures and describing the seat occupancy classification system according to some embodiments of the subject disclosure, some background information and aspects related to the subject disclosure will be provided.

The techniques described herein relate generally to a concept of more reliably detecting a seat occupancy state for seats in a vehicle. An example seat occupancy classification system combines the result from a seat-based image classifier applied to defined image crops around the seats with the results from several object-based modules applied to the whole image. The example seat occupancy classification system output may provide a current seat occupancy state for each seat as output. Possible seat states according to embodiments may be: Empty seat, person, child seat, and object. If the seat occupancy state is 'person', the seat occupancy classification system may also provide as output whether it is an adult or a child. Moreover, if the seat occupancy state is 'child seat', the seat occupancy classification system may also provide as output whether a child is sitting inside the child seat or not.

In an embodiment, the seat occupancy classification system may also provide further information on the objects, which may comprise persons, non-living objects, pets, or the like, associated to the seat as output. For example, the seat occupancy classification system may provide associated skeleton models for seats with state 'person', associated face bounding boxes for seats with state 'person', and/or associated bounding boxes for seats with state 'person', 'object' or 'child seat', For seats with state 'child seat', the seat occupancy classification system may also provide skeleton models and/or bounding boxes for a child sitting inside if the child is visible. Moreover, the seat occupancy classification system may also provide an occlusion status for each seat.

One single person or child seat may be associated to exactly one seat. For example, a person sitting between two seats or leaning over to another seat may never be associated to both seats. Compared to seat occupancy systems relying solely on seat-based classification, the herein described seat occupancy classification system increases the reliability of the provided seat occupancy state and occlusion status by additionally considering object detection outputs inside a seat occupancy fusion module. Furthermore, detailed information about associated objects for each seat provides valuable information for further vehicle safety and control modules.

The output of a body keypoint module may for example be used to decide whether a person is sitting in a normal position. The corresponding images with the body keypoints, also called frames, can then be used to further estimate size, age and/or weight of the person, e.g., for airbag control, based on the associated body keypoints. This may also be achieved based on object bounding boxes provided by an object detector. For example, a child can thereby be distinguished from an adult. Furthermore, frames with persons sitting in unusual positions, e.g., leaning to the sides or front, can be handled with lower priority for subsequent detection tasks like seat belt recognition. The bounding box output from the object detector may also give accurate information on position and size of an object.

The proposed system can combine an seat-based classifier, also called image region classifier, and several independent object-based modules, also called object detection approaches, which may be processed in parallel. It is not necessary for all modules to run with the same frame rate. In particular, the image region classifier does not need to be always processed for all defined image regions, e.g., not for each region around each seat. Instead, any uncertainty of the fusion result can be used for prioritizing a specific seat or image region for running the seat-based classifier.

A seat-based classifier may use a fixed bounding box around a seat as input and may provide the probabilities for four possible seat occupancy classes as described above, e.g., for classes or types 'empty seat', 'child seat' (in some embodiments with subclasses 'child seat with child' and 'child seat without child'), person (in some embodiments with subclasses 'adult' and 'child'), and 'object' as output. The output is then fused with outputs of other classifiers or modules over time. The image region classifier may make advantage of the previous knowledge about seat position and background. The image region classifier is associated to a specific seat; therefore, no additional association is necessary. The classification is still possible for partially occluded seat regions as long as the correct class is still recognizable. This may be determined based on confidence values.

The seat occupancy classification described herein may also comprise one or more object-based modules. Among them, there may be an object detector, for example, using a YOLO object detection algorithm, a body keypoint classifier, and/or a face detector. In those embodiments, the object detector scans the whole image for different kinds of objects, e.g., for persons, child seats, children, objects, and/or empty seats. A bounding box tracker is used to fuse the results over time. The result is a list of tracked bounding boxes along with probability values for each possible class associated to the bounding box. In the body keypoint classification modules, body keypoints are detected and merged to skeleton models, which are then tracked over time. Each skeleton model includes a confidence score, created from a number of keypoints and their confidence values. Similar to the object detector, the face detector scans the image for faces. While faces are a valuable indication for a present person, it alone provides rather uncertain information about on which seat the person is sitting.

An additional matching step may then combine the outputs from the body keypoint detector, the face detector and the object detector to combined objects. Thereby a combined object could also contain one base object, e.g. a face object only, if no matching is reasonable. An additional soft association step for each object provides association probabilities for all seats in the car.

In some embodiments, the object detector and the image region classifier may be explicitly trained with empty seats as a separate seat occupancy class rather than just being handled as a default state in case no other class is detected. This helps the system to distinguish between a visible empty seat and difficult cases of occupied states, like in case of occluded seats or persons/child seats covered, e.g., by a blanket or a newspaper.

The seat occupancy classification system described herein may also comprise additional components, processors and modules, like an occlusion module and/or a child detection and/or background module.

The occlusion module uses the input from the different modules to provide an occlusion value for each seat. The image region classifier therefore provides an occlusion value, which is trained additionally to the seat occupancy class. The results from other classes are used to detect indirect occlusion if objects or persons already associated to a seat are partially covering another seat. The occlusion values are considered for state changes between the seat occupancy classes. The occlusion values can also be used in the seat-based and/or object-based modules directly to prevent the update of temporal filtering/tracking in case of occlusion.

For airbag safety a relevant task is distinguishing persons from child seats. Thereby, a child sitting in a forward-facing child seat is the most critical error source as the child can appear similar to a small person, e.g., when the child seat is partly occluded by the child. The example child detection system combines three approaches to a reliable final prediction. In case of contradicting results, the class is reported as unknown state, and eventually, the problem could be solved via a Human-Machine Interface (HMI).

The first approach relates to a child detection by an object-based approach. For seats with state 'child seat', the system additionally checks whether an object box classified as 'child', or a child skeleton model can be associated to this child seat. The associations are additionally added to the output to indicate that the child seat is occupied. For example, in response to a bounding box classified as 'child' being provided by the object detector for a seat having a previous seat occupancy state of type 'child seat', the methods provided herein may comprise indicating the subclass 'with child' for the seat occupancy state 'child seat' for the seat. Additionally or alternatively, the methods may comprise, in response to a child skeleton model being provided by the body keypoint module for a seat having a previous seat occupancy state of type 'child seat', indicating the subclass 'with child' for the seat occupancy state 'child seat' for the seat.

The second approach relates to a child detection by an occupancy state transition logic. In most cases the detected occupancy state does not switch directly from 'person' to 'child seat' and vice versa as it is likely to recognize an empty seat in between. Hence, a transition from child seat to person is an indication for a child in child seat even if the child seat is (falsely) not detected anymore. An additional size or age estimation based on the associated face box and/or skeleton model can help here to increase the certainty for a detected person being a child. This means, the methods described herein may comprise, in response to a change of previous seat occupancy state 'child seat' to current seat occupancy state 'person' of a seat when generating the current seat occupancy states of the seats, applying an additional size or age estimation of the detected person based on the output of at least one of the object detector, the body keypoint module, and the face detector for verifying the current seat occupancy state.

The third approach relates to a child detection by a background comparison model. Limitation of the state transition logic is that direct switches from 'child seat' to 'person' and from 'empty seat' to 'child seat with child' cannot be fully excluded. For a higher reliability, the example system comprises a further background comparison model, e.g., implemented by a Siamese neural network, which compares the background seat when a person is detected to the appearance of the seat which was visible before (either empty seat or child seat). In other words, the methods herein described may comprise, in response to a change of previous seat occupancy state 'empty seat' to current seat occupancy state 'child seat' with subclass 'with child' when generating the current seat occupancy states of the seats, applying a background comparison model comparing a current background seat to a previous background of the seat for verifying the seat occupancy state.

Moreover, additional vehicle data from different sensors may be considered, too. Dependent on the state of the vehicle (e.g. a car) some seat occupancy state transitions are unlikely or even (almost) impossible. If all doors are closed or the car is driving, no person and no child seat can leave the car. Also, a detected belt is an indicator that a person might not leave the seat.

It should be noted that although the disclosure relates to modules and/or classifiers, e.g., a seat-based classifier and different kinds of object-based modules, this is not limiting. The methods described to be performed by the modules can be performed by other modules or all or part of the processes can be performed within one single module. Hence, although a architectural understanding is in line with the disclosure, also a functional understanding of the modules can be applied.

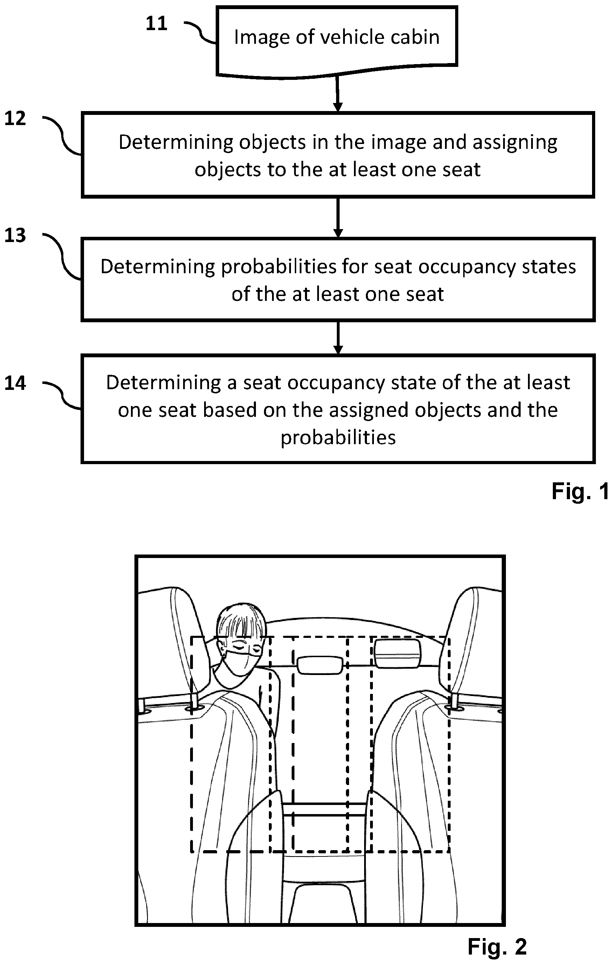

Fig. 1 is a flow chart of the method of determining seat occupancy states. The method starts in box 11 with an image of a vehicle cabin. This means, the image, also referred to current image within this disclosure, is obtained, e.g., directly transmitted from an onboard camera of the vehicle or preprocessed by other modules comprised by a computing system of the vehicle. The image shows an interior of the vehicle with the seats of the vehicle.

Thereafter, objects are determined in the image and assigned to at least one seat, which is shown in box 12. In an embodiment, at least one object-based module is applied on the current image to detect objects in the current image. Object refers to any living or non-living object shown on the current image, e.g., a person, an animal, any non-living object, and such. Object-based modules may be, e.g., an object detector, a body keypoint module, and/or a face detector.

In box 13, the method further determines probabilities for seat occupancy states of the at least one seat. In an embodiments, the method applies a seat-based classifier on at least one crop of the current image, wherein the at least one crop of the current image is assigned to a seat of the vehicle. The crop may be a bounding box around the seat, which is obtained by the seat-based classifier for each seat the seat-based classifier is working on. The crop may also be defined by, e.g., parameters, edges, corner coordinates on the image, or the like. Obtaining in this disclosure generally comprises retrieving from an on-board memory or a cloud memory, receiving from another module, or determining based on other data, e.g., based on the current image. The seat-based classifier may also obtain knowledge about a previous background of the seat. The seat-based classifier may also be a machine learning classifier that is trained on historical images of the vehicle or similar vehicles. In one embodiment, the seat-based classifier determines probabilities of the seat occupancy states, i.e. if four seat occupancy states are defined, each seat is assigned with (at least) four probabilities, namely, one probability or confidence value for each seat occupancy state.

Finally, a seat occupancy state of the at least one seat based on the assigned objects and the probabilities is determined. This is depicted in box 14. In an embodiment, the output of the seat-based classifier and the output of the at least one object-based module are fused to generate current seat occupancy states of the seats. Fusing may comprise a plurality of decision steps in order to determine a current seat occupancy state. Moreover, the seat-based classifier may not be executed for all seats in the vehicle but only for some of the seats in the vehicle.

Although Fig. 1 depicts all processes to happen one after another, the skilled person will be aware that the order of the processed may be different or even be executed in parallel. For example in one embodiment, the seat-based classifier (e.g., box 13) may be applied before or in parallel to the at least one object-based module (e.g., box 12). Moreover, the seat-based classifier (e.g., box 13) may also be applied while a fusion module (which also may also process box 14) is already executed. This means, the object-based modules may have been applied and may have detected objects on seats. If there exist unclarities or undetermined states for some seats during execution of the fusion module, the seat-based classifier may be applied and afterwards the output of the seat-based classifier is fused with the output of the object-based modules. Generally, the fusion module fuses outputs of different modules and components of the herein described seat occupancy classification system.

Fig. 2 depicts bounding boxes used for determining probabilities for seat occupancy states of the at least one seat, e.g., by an exemplary seat-based classifier. As described above, the seat-based classifier may be applied on crops of the image, i.e., not on the whole image. Moreover, such crops may relate to bounding boxes that define a region for classifying the seat occupancy state of a seat. In the example of Fig. 2, three possible bounding boxes for each rear seat of a car are depicted. The seat-based classifier then classifies the image within this bounding box. The bounding boxes may be fixed or adaptable. In the given example, the seat-based image classifier may determine the seat occupancy state 'empty seat' for the seats in the middle and on the right and the seat occupancy state 'person' for the seat on the left.

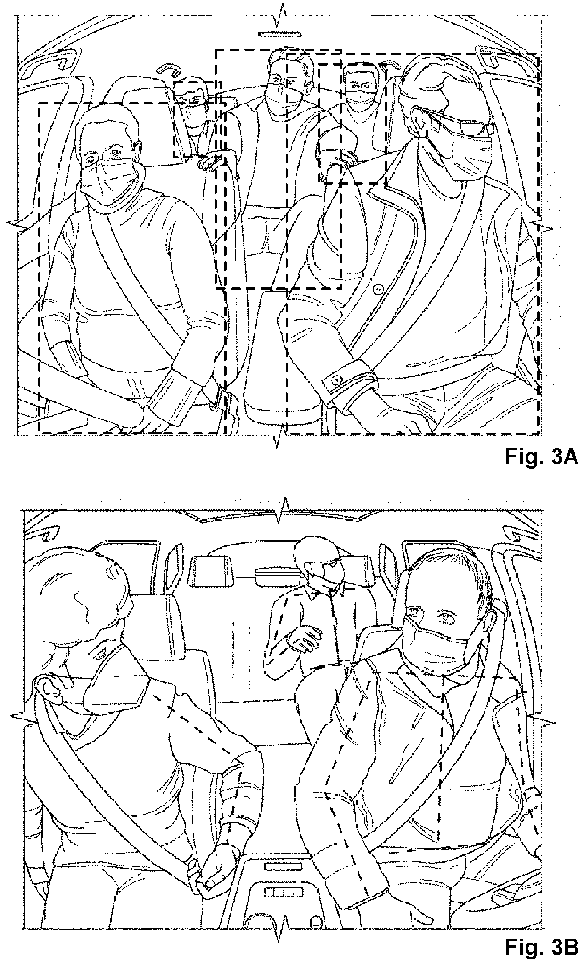

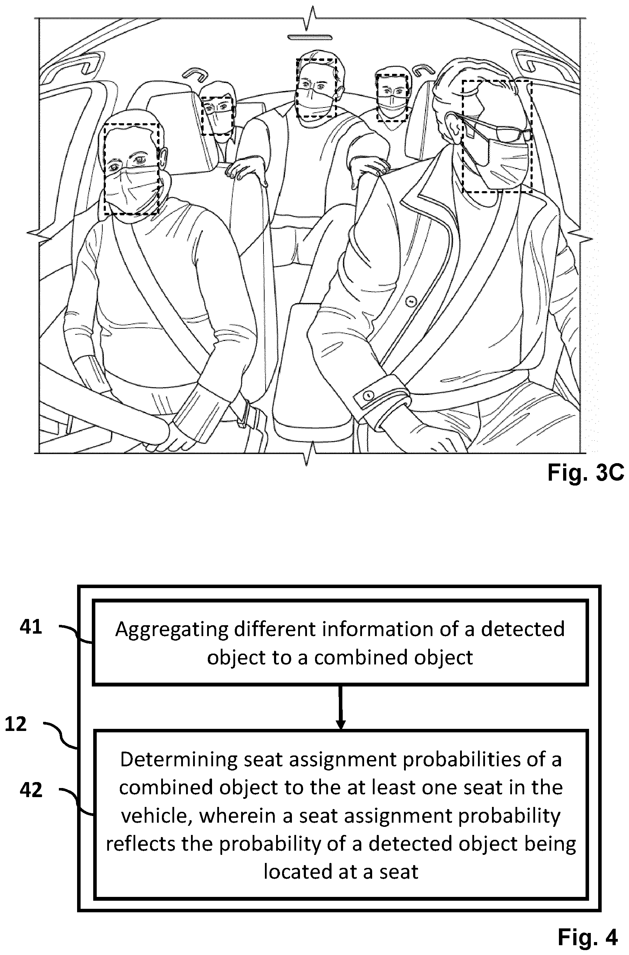

Figs. 3A, 3B, and 3C depict the interior of cars and highlights possible outputs of different object-based modules. Fig. 3A shows bounding boxes generated, e.g., by an exemplary object detector. The object detector analyzes the current image for the detection of objects and classification of object types. In some embodiments, the object detector outputs one or more tracked bounding boxes for a detected object over time and a confidence value for the classification of the object type. Fig. 3A depicts such bounding boxes around five persons in a car. The object-detector may be applied periodically and may record (and e.g., store) the bounding boxes or at least the latest few bounding boxes for an object over time so that also a movement of the object can be detected. Moreover, the object types, to which the object detector classified the detected objects, may comprise, e.g., person, child seat, child, object, and/or empty seat. Further object types or classes may relate to a distinction between adult and child or between occupied and empty child seat. The object detector may also output confidence values for all possible classes of an object.

Fig. 3B shows skeleton models of keypoints generated, e.g., by an exemplary body keypoint module. The body keypoint module determines body keypoints and merges the body keypoints to one or more skeleton models. The body keypoints may be determined based on image analyses and relate to the shoulders, elbows, hands, and the like. The body keypoint module outputs the one or more skeleton models and a confidence score of a skeleton model based on the respective confidence values of the body keypoints. The confidence values of the body keypoints may relate to how certain the algorithm can determine that a respective body keypoint relates to the classified body region, e.g., shoulder. Fig. 3B depicts how skeleton models for two persons in a car may look like. From skeleton models, size, age, and/or seating position may be determined.

Fig. 3C shows bounding boxes generated, e.g., by an exemplary face detector. The face detector is similar to the object detector. Hence, a YOLO model can be applied, which is trained to detect faces. The face detector analyses the current image for the detection of faces and may, in some embodiments, output one or more tracked bounding boxes for a detected face over time. The overall process is similar to the process of the object detector but with one single class, namely, the class 'face'.

Fig. 4 is a flow chart of an embodiment of determining objects in the image and assigning objects to the at least one seat (box 12 of Fig. 1). In an embodiment, this is achieved by applying the object-based modules as described before, in particular, the object detector, the body keypoint module, and the face detector. This process comprises aggregating different information of a detected object to a combined object as shown in box 41. A combined object comprises information of a detected object, e.g., received from the different object-based module outputs. For example, a combined object may comprise a bounding box from the object detector classified as 'person', a face bounding box from the face detector, and a skeleton model from the body keypoint module. Another combined object may comprise a bounding box from the object-detector classified as 'object' or 'child seat'.

When having combined the information, the method further comprises seat assignment probabilities, also referred to as soft seat assignment probabilities in this disclosure, of a combined object to the at least one seat in the vehicle, wherein a seat assignment probability reflects the probability of a detected object being located at a seat, which is shown in box 42. This means, the (but not always all) information stored for a combined object can be used to determine to which seat the object is assigned. In some embodiments, an assignment probability for each seat is determined to each combined object.

Although not shown in Fig. 4, the skilled person will be aware that the process may also be differently ordered. For example, the soft assignment probabilities may first be determined for the outputs of the object-based modules, and the soft seat assignments and the outputs of the respective object-based modules may then be aggregated to combined objects. Moreover, no aggregating to combined objects may be applied but the outputs of the object-based modules may all be fused in one process, e.g., processed in the fusion module.

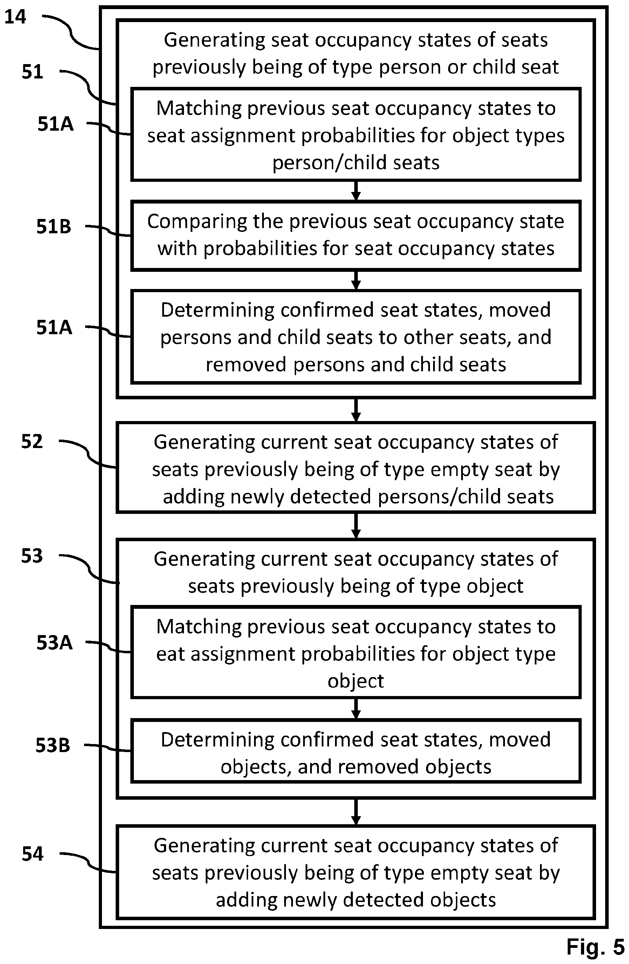

Fig. 5 is a flow chart of an embodiment of fusing different inputs (i.e., output from other modules) to generate seat occupancy states. In this example, fusing the output of the seat-based classifiers and the output of the at least one object-based module to generate the current seat occupancy states of the seats (i.e., box 14 of Fig. 1) generally comprises four processes. These processes are generating current seat occupancy states of seats previously being of type person or child seat, which is shown in box 51, generating current seat occupancy states of seats previously being of type empty seat (1^{st} time), which is shown in box 52, generating current seat occupancy states of seats previously being of type object, which is shown in box 53, and generating current seat occupancy states of seats previously being of type empty seat (2^{nd} time), which is shown in box 54.

In particular, generating current seat occupancy states of seats previously being of type person or child seat (box 51) further comprises matching previous seat occupancy states of the seats to the soft seat assignment probabilities for object types person or child seats. This is depicted in box 51A and means that it is compared whether there is a change from a previous occupancy state to assignments made by the object-based modules. As shown in box 51B, in response to determining an uncertainty in the matching for a seat, the previous seat occupancy state of the seat is compared with the probabilities, e.g., the output of the seat-based classifier for the seat. The fusion module, which may execute the processes of Fig. 5, may schedule or call the seat-based classifier for the respective seat for comparing the output. Finally and as shown in box 51C, a confirmed seat states, moved persons and child seats to other seats, and removed persons and child seats is determined based on the matching and/or comparing. These states and information may be ordered in one or more lists. List is to be understood broadly in such that zero to a plurality of confirmed seat states, zero to a plurality of moved persons and child seats to other seats, and/or zero to a plurality of removed persons and child seats are determined. The entries of the lists can be stored and/or outputted as one combined list, as separate lists, as single values and the like.

Generating current seat occupancy states of (some) seats previously being of type empty seat (box 52) is then done by adding newly detected persons and/or child seats. This means that for seats that were previously determined to be empty and now persons and/or child seats are detected, e.g., by the object-based modules and/or the seat-based classifier, the newly detected persons and/or child seats are added. Hence, after processing of boxes 51 and 52, all seats with persons/child seats are assigned the seat state 'person' or 'child seat'.

Generating current seat occupancy states of seats previously being of type object (box 53) has a lower priority for safety means and is therefore executed on position 3. It is a slightly simplified version of box 52. The first process as shown in box 53A is similar to process of box 51A and comprises matching previous seat occupancy states of the seats to the soft seat assignment probabilities for object type object. Although not shown, a similar process like box 51B may in some embodiments also be executed, i.e., the previous seat occupancy state of the seat may also be compared with the probabilities, e.g., the output the seat-based classifier for the seat, in response to determining an uncertainty in the matching for a seat. Finally and as shown in box 53B, confirmed seat states, moved objects to other seats, and removed objects is determined based on the matching.

Generating current seat occupancy states of (the remaining) seats previously being of type empty seat (box 54) is done by adding newly detected objects. This means that for seats that were previously determined to be empty and now objects are detected by the object-based modules and/or the seat-based classifier, the newly detected objects are added. Hence, after this process, only empty seats shall have remained in the state 'empty'.

Although Fig. 5 depicts the four basic processes 51 and 53 with subprocesses, these subprocesses may also be different as will be understood by the person skilled in the art as long as they achieve the desired outcome. Moreover, in some circumstances no decision may be made, whether a person is to be assigned to a seat, whether an object really is an object, or the like. Hence, in such cases, the method may also provide the user via a human machine interface with a prompt requesting input from a user and/or informing the user about an uncertainty.

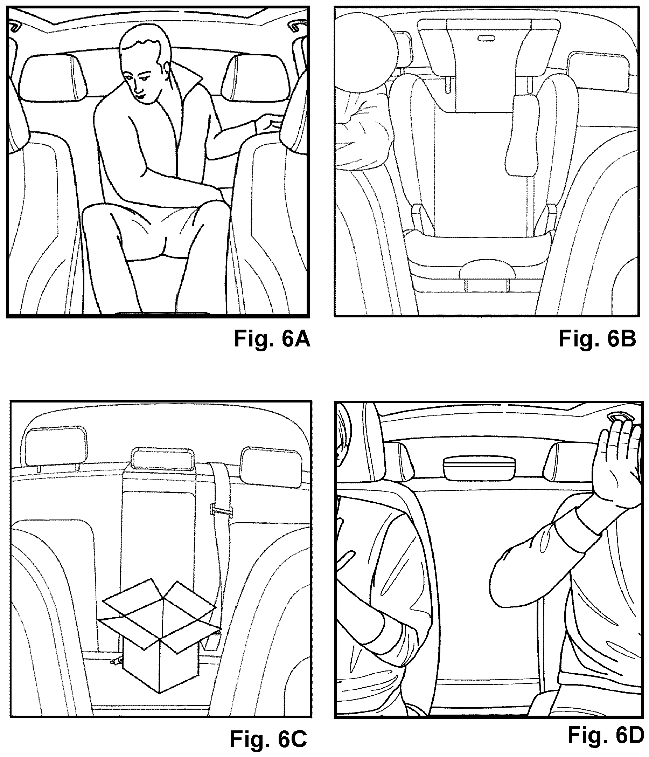

Figs. 6A, 6B, 6C, and 6D illustrate possible seat occupancy states. Fig. 6A depicts a person on the rear middle seat. The seat occupancy detection system may then set the seat occupancy state to 'person'. However, there may exist problems in detecting a person in some detection situations. For example, head or part of the upper body can lean over to the front or sideways to another seat. The face may be occluded by a book, the persons in the front, hands, or the like. Class 'person' may in some embodiments further be distinguished into subclasses that include 'adult' and 'child'. If the occupancy state is 'adult', an airbag system needs to be activated. The seat occupancy classification system also detects when a person moves to another seat.

Fig. 6B shows a child seat (without child). All kinds of forward and rearward facing child seats can be detected even when mounted in the wrong direction (for example, rear facing infant carriers mounted in front facing direction). A child seat can either be empty or contain a child or any kind of object. The child seat with or without child can be occluded by the persons in the front or hands, objects, or the like. In any case, an airbag system may be deactivated. In some embodiments, applying an airbag with reduced pressure might be an alternative option for front facing child seats with a child.

Fig. 6C shows an object on a seat. The 'object' class includes seats with one or more objects placed somewhere on the seating area. This does not include objects in the air in front of the seats, for example a hand holding a mobile phone. If the occupancy state is 'object', an airbag system may be deactivated. Fig. 6D further depicts an empty seat. Not all situations are such clear. For example, the empty seat may also be partially used by a person (e.g., a voluminous person on a rear seat), occluded by a leaning person, and the like. The 'empty seat' class includes all cases where an empty seating area is recognizable. If the occupancy state is 'empty seat' an airbag system may be deactivated.

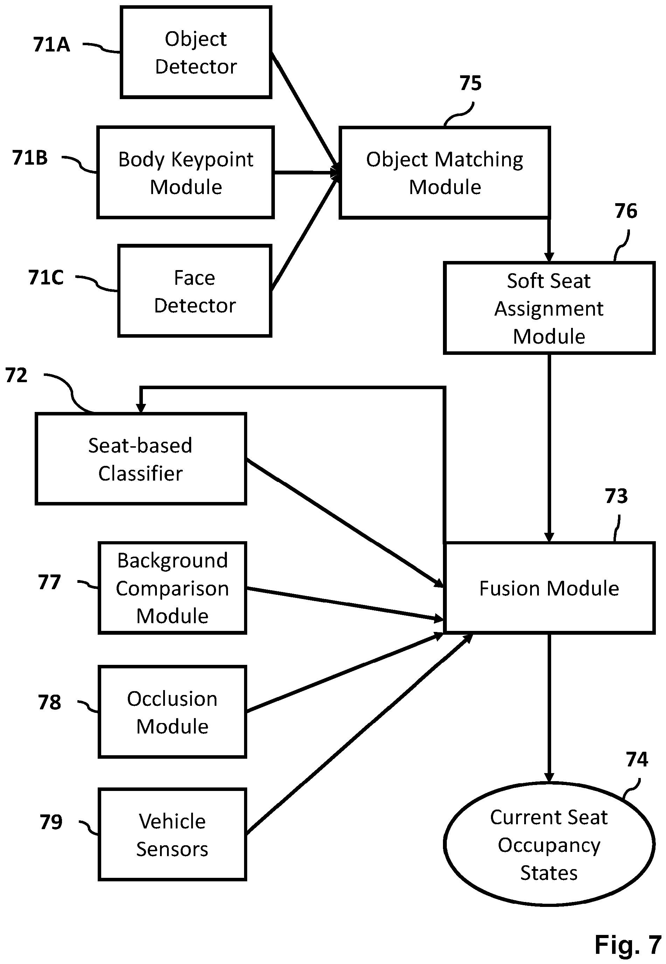

Fig. 7 presents an overview on an exemplary overall seat occupancy classification system. The seat occupancy classification system comprises one or more object-based modules. In the example of Fig. 7, there are three object-based modules, namely, an object detector 71A, a body keypoint module 71B, and a face detector 71C. Moreover, the seat occupancy classification system comprises a seat-based classifier 72. The outputs of the object-based modules 71A, 71B, and 71C, and the seat-based classifier 72 are fused by the fusion module 73 in order to determine current seat occupancy states 74.

Before applying the fusion module 73 on the outputs of the single object-based modules 71A, 71B, and 71C, the outputs may be combined to combined objects - or generally to super objects - by an object matching module 75. The combined objects comprise information determined by the single object-based modules 71A, 71B, and 71C. Based on the combined objects, a soft seat assignment module 76 assigns the detected combined objects to seats. For example, each combined object may be assigned a soft assignment probability that this combined object is to be assigned to a respective seat in the car. Although not shown, the object matching module 75 may also not be present and the soft seat assignment module 76 is applied on all outputs of the object-based modules 71A, 71B, and 71C individually.

The output of the soft seat assignment module 76 is fused in the fusion module 73, e.g., compared with the previous seat occupancy states and decided based on the input from the seat-based classifier 72, whether the current seat occupancy state has changed or not. The seat-based classifier 72 may also be triggered or scheduled by the fusion module 73 as shown by the arrow from the fusion module 73 to the seat-based classifier 72 and as described in embodiments above.

Additionally, the fusion module 73 may also take information from a background comparison module 77, an occlusion module 78, and/or further vehicle sensors 79 into account. The background comparison module 77 is used, e.g., for further child detection tasks as explained above. For example, if a seat occupancy state change from previous seat occupancy state being 'child seat' to current seat occupancy state 74 being determined to be 'person' is detected, the fusion module 73 will trigger the background comparison module 77 to determine whether the child seat has really been removed or whether the person is a child in a child seat.

The occlusion module 78 may be used to determine occlusion values for the seats, wherein the occlusion values are considered when generating the current seat occupancy states 74 of the seats. Occlusion values may help to determine an occlusion state of the seats and to adapt confidence values of an assignment or seat occupancy state accordingly.

Finally, the further vehicle sensors 79 may comprise a door opening sensor, which can be taken into account if a person previously assigned to a seat is missing or suddenly appearing when determining the current seat occupancy states 74. For example, if no door has been opened, the person is in the car. Hence, the seat occupancy detection system may prompt the driver of the car to input where the respective person is sitting.

The vehicle sensors 79 may also or alternatively comprise a seat belt sensor. If the seat belt sensor detects that a seat belt is fastened, it may be more likely that the current seat occupancy state 74 is to be determined as 'person'. The vehicle sensors 79 may also comprise a velocity detection module, which may be used analogously to the door opening sensor. For example, if the speed is higher than a threshold, it is unlikely that a person has left or entered the car.

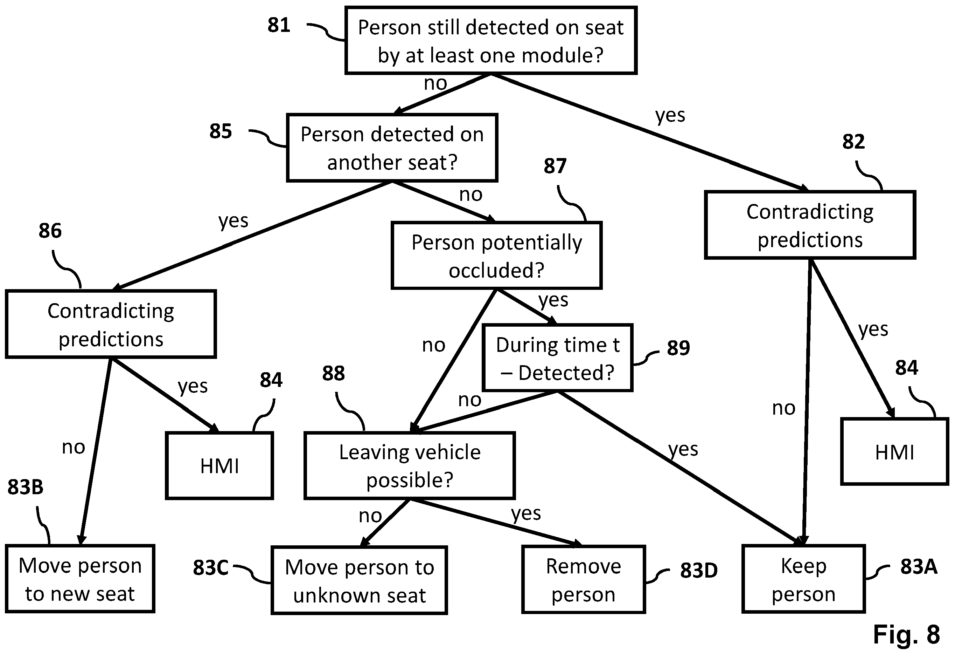

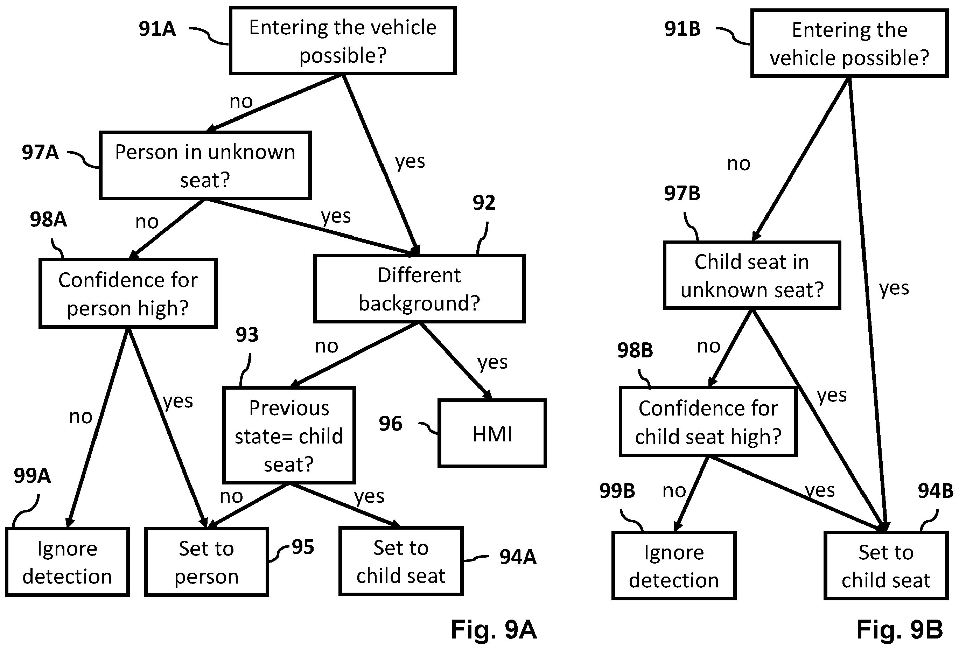

The fusion module 73 fuses different inputs from modules 71A, 71B, 71C, 72, 77, 78, and/or 79 to determine current seat occupancy states 74. Specific flow charts of how to determine seat occupancy states according to embodiments are shown in Figs. 8, 9A, and 9B.

Fig. 8 depicts a flow chart of how to determine seat occupancy states for previous seat occupancy states of type 'person', i.e., an explicit example of the fusion process. The process starts in box 81 with determining whether the person is still detected on the seat, on which the person was detected before, by at least one of the modules, e.g., the object-based modules 71A, 71B, and 71C of Fig. 7. If yes (moving to box 82), it is determined whether there are some modules, e.g., the object-based modules 71A, 71B, and 71C and/or the seat-based classifier 72 of Fig. 7, that have provided contradicting predictions. If all modules provide the same assessment, hence, there are not contradicting predictions, the process proceeds to box 83A and keeps the person. This means, the previous seat occupancy state is confirmed. If there are contradicting predictions (moving to box 84), a prompt may be provided to the user that there is an uncertainty with the current seat occupancy state of this seat. Alternatively, the seat occupancy classification system may also handle such uncertainties by itself.

If the person previously assigned to the seat is not detected any more by any module on this seat (no-branch from box 81 to box 85), it is determined whether the person (e.g., identified based on a biometric face identification) or any previously not detected person is detected on another seat. If yes, i.e., the person has been determined on another seat, the method determines whether there are contradicting predictions from other modules in box 86. If all modules provide the same assessment, hence, there are not contradicting predictions, the person previously assigned to the seat is moved to the new seat in box 83B. This may be done by setting the current seat occupancy state of the seat to 'empty seat' and setting the current seat occupancy state of the other seat to 'person'. If there are contradicting predictions, the user is prompted as shown in box 84. Alternatively, the seat occupancy classification system may also handle such uncertainties by itself.

If the person previously assigned to the seat is not detected on any other seat (no-branch from box 85 to box 87), it is determined, e.g., based on an occlusion value provided from the occlusion module 78 of Fig. 7, that the person may not be occluded, the process checks in box 88 whether the person could have left the car. This may be determined based on further vehicle sensors 79 of Fig. 7, such as a velocity sensor or door opening sensor. If leaving was not possible or unlikely, the person is kept in the system but moved to an unknown seat in box 83C. This seat state can then be processed further as shown in Figs. 9A or 9B. Otherwise, the person has likely left the car, i.e., the process removes the person as shown in box 83D.

If the (not detected) person can be occluded, e.g., because occlusion values for some seats are indication an occlusion status, which is shown as the yes-branch from box 87 to box 89, another time frame may be waited, e.g., time t, and the output of the modules is checked again. This is indicated in box 89. Alternatively to box 89, the seat-based classifier may be triggered for this seat and/or neighboring seats. If the person is finally detected, the person may be kept (box 83A). Otherwise, the process moves again to box 88 and proceeds as explained above.

The results of the determination process of Fig. 8, i.e., boxes 83A, 83B, 83C, and 83D may be stored, e.g., in lists of changed or confirmed seat states. Moreover, a list of removed persons may be shown to the passengers, e.g., to be confirmed or for information. Generally, the seat states may be stored in a list-like data structure for processing. The process of Fig. 8 may be similar for seats that have a previous seat occupancy state 'child seat'.

Figs. 9A and 9B present flow charts of how to add a person (Fig. 9A) or child seat (Fig. 9B) as occupancy states, i.e., examples of a fusion process. The process of Fig. 9A starts with box 91A if a new person on a previously empty seat is detected (e.g., by the process of Fig. 8) and checks whether entering the vehicle was possible. If yes, a background check may be made in box 92. If the previous background is the same as the background now detected (no-branch to box 93), it depends on the previous state, which current seat occupancy state will be assigned. If the previous seat occupancy state was 'child seat', the current seat occupancy state is set to 'child seat' in box 94A. In some embodiments, the current seat occupancy state will further indicate the subclass 'empty seat with child'. If the previous seat occupancy state was 'empty seat', the current seat occupancy state is set to 'person' in box 94A. If the previous background is different to the background now detected (yes-branch from box 92 to box 96), the user is prompted for input as explained before. Alternatively, the seat occupancy classification system may also handle such uncertainties by itself.

If entering the car was not possible (no-branch from box 91A to box 97A), it is determined if a person was moved to an unknown seat, e.g., as explained with respect to box 83C in Fig. 8. If yes, the process moves to box 92 and proceeds as explained before. If no, the method determines in box 98A whether the detection of the person was made on high confidences, i.e. if the modules that detected the person returned high confidence values or seat assignment probabilities for this determination. If the confidence values were high, e.g., higher than a threshold like 80%, 85%, or the like, the method proceeds to box 95 and sets the current occupancy seat state of this seat to 'person'. Otherwise, the detection of the person is ignored as shown in box 99A.

The process of Fig. 9B is similar to the process of Fig. 9A as shown with similar reference signs. The process starts with box 91B if a new child seat on a previously empty seat is detected (e.g., by the process of Fig. 8) and checks whether entering the vehicle was possible. If yes, the current seat occupancy state is set to 'child seat' as shown in box 94B.

If entering the car was not possible (no-branch from box 91B to box 97B), it is determined if a child seat was moved to an unknown seat, e.g., similarly to box 83C in Fig. 8. If yes, the process moves to box 94B and sets the current seat occupancy state to 'child seat'. If no, the method determines in box 98B whether the detection of the child seat was made on high confidences, i.e. if the modules that detected the child seat returned high confidence values or seat assignment probabilities for this determination. If the confidence values were high, e.g., higher than a threshold like 80%, 85%, or the like, the method proceeds to box 94B and sets the current occupancy seat state of this seat to 'child seat'. Otherwise, the detection of the child seat is ignored as shown in box 99B.

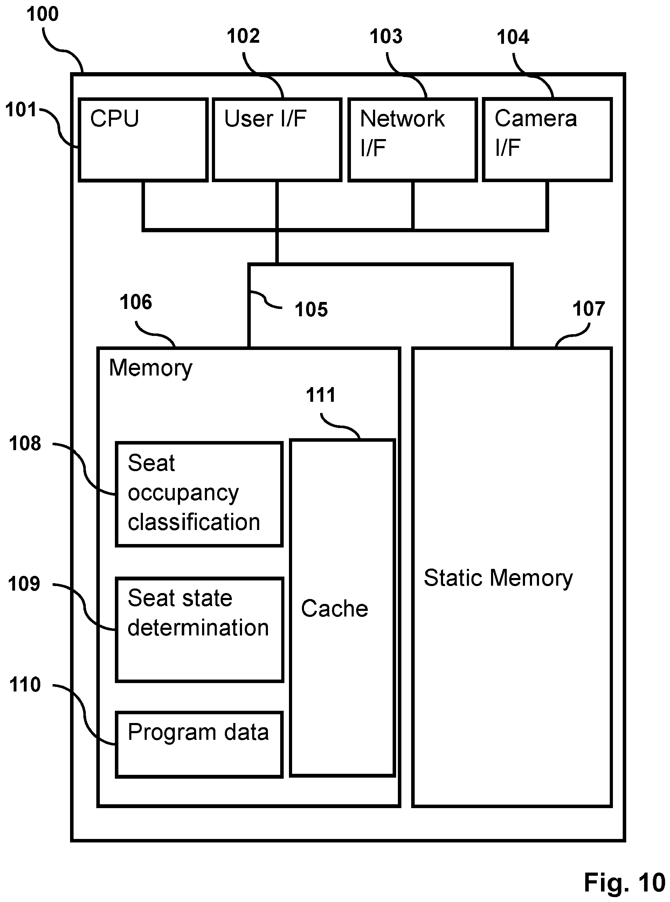

Fig. 10 is a diagrammatic representation of internal components of a computing system 100 implementing the functionality as described herein. The computing system 100 may be located in the vehicle and includes at least one processor 101, a user interface 102, a network interface 103 and a main memory 106, that communicate with each other via a bus 105. Optionally, the computing system 100 may further include a static memory 107 and a disk-drive unit (not shown) that also communicate with each via the bus 105. A video display, an alpha-numeric input device and a cursor control device may be provided as examples of user interface 102.

Furthermore, the computing system 100 may also comprise a specified camera interface 104 to communicate with an on-board camera of the vehicle. Alternatively, the computing system 100 may communicate with the camera via the network interface 103. The camera is used for taking the current image 1. The computing system 100 may also be connected to database systems (not shown) via the network interface, wherein the database systems store at least part of the images needed for providing the functionalities described herein.

The main memory 106, which may correspond to the memory 36 depicted in Fig. 3, may be a random-access memory (RAM) and/or any further volatile memory. The main memory 106 may store program code for the seat occupancy classification system 108 and the seat state determination system 109. The memory 106 may also store additional program data required for providing the functionalities described herein. Part of the program data 110, the seat state determination system 109 and/or the seat occupancy classification system 108 may also be stored in a separate, e.g., cloud memory and executed at least in part remotely. In such an exemplary embodiment, the memory 106 may store at least one of current occupancy states, bounding areas, body keypoints, and the like according to the methods describes herein. The current occupancy states, bounding areas, body keypoints, and the like may also be stored in a cache 111, which may again be located in a local or remote location.

According to an aspect, a vehicle is provided. The herein described seat state assignment method may be stored as program code 109 and may be at least in part comprised by the vehicle. The seat occupancy classification system may be stored as program code 108 and may also at least in part be comprised by the vehicle. Parts of the program code 108 may also be stored and executed on a cloud server to reduce the computational effort on the vehicle's computing system 100. The vehicle may also comprise a camera, e.g., connected via the camera interface 104, for capturing the current image 11.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

In some examples according to the disclosure, a computerized method of determining seat occupancy states of seats of a vehicle by a seat occupancy classification system is presented. The method comprises obtaining a current image showing an interior with the seats of the vehicle, applying at least one object-based module on the current image to detect objects in the current image, applying a seat-based classifier on at least one crop of the current image, wherein the at least one crop of the current image is assigned to a seat of the vehicle, and fusing the output of the seat-based classifier and the output of the at least one object-based module to generate current seat occupancy states of the seats.

In embodiments, the seat-based classifier obtains a bounding box around the seat and knowledge about previous background of the seat for determining probabilities of the seat occupancy states. In some embodiments, the at least one object-based module comprises an object detector, wherein the object detector analyses the current image for the detection of objects and classification of object types. In further embodiments, the object detector outputs one or more tracked bounding boxes for a detected object over time and a confidence value for the classification of the object type.

In yet further embodiments, the at least one object-based module further comprises a body keypoint module, wherein the body keypoint module determines body keypoints and merges the body keypoints to one or more skeleton models. In further embodiments, the body keypoint module outputs the one or more skeleton models and a confidence score of a skeleton model based on a number and respective confidence values of the body keypoints.

In yet further embodiments, the at least one object-based module further comprises a face detector, wherein the face detector analyses the current image for the detection of faces. In further embodiments, the face detector outputs one or more tracked bounding boxes for a detected face over time.

In some further embodiments, the seat occupancy states comprise types person, child seat, object, and empty seat. In yet further embodiments, applying the at least one object-based module comprises combining the outputs of the object-based modules to combined objects, wherein a combined object comprises information from different object-based module outputs about an object, and determining soft seat assignment probabilities of a combined object to the seats in the vehicle.

In some embodiments, fusing the output of the seat-based classifiers and the output of the at least one obj ect-based module to generate the current seat occupancy states of the seats comprises generating current seat occupancy states of seats previously being of type person or child seat by matching previous seat occupancy states of the seats to the soft seat assignment probabilities for object types person or child seats, in response to determining an uncertainty in the matching for a seat, comparing the previous seat occupancy state of the seat with the output of the seat-based classifier for the seat, and determining a list of confirmed seat states, a list of moved persons and child seats to other seats, and a list of removed persons and child seats based on the matching and/or comparing.

In these embodiments, fusing the output of the seat-based classifiers and the output of the at least one obj ect-based module to generate the current seat occupancy states of the seats further comprises generating current seat occupancy states of seats previously being of type empty seat by adding newly detected persons and/or child seats. In these embodiments, fusing the output of the seat-based classifiers and the output of the at least one object-based module to generate the current seat occupancy states of the seats further comprises generating current seat occupancy states of seats previously being of type object by matching previous seat occupancy states of the seats to the soft seat assignment probabilities for object type object, and determining a list of confirmed seat states, a list of moved objects to other seats, and a list of removed objects based on the matching. In these embodiments, fusing the output of the seat-based classifiers and the output of the at least one object-based module to generate the current seat occupancy states of the seats further comprises generating current seat occupancy states of seats previously being of type empty seat by adding newly detected objects.

In further embodiments, the method further comprises applying an occlusion module to determine occlusion values for the seats, wherein the occlusion values are considered when generating the current seat occupancy states of the seats. In some embodiments, the seat occupancy states comprise subclasses with child and without child for type child seat, wherein the method further comprises, in response to a bounding box classified as child being provided by the object detector for a seat having a previous seat occupancy state of type child seat, indicating the subclass with child for the seat occupancy state child seat for the seat, and/or, in response to a child skeleton model being provided by the body keypoint module for a seat having a previous seat occupancy state of type child seat, indicating the subclass with child for the seat occupancy state child seat for the seat.

In some embodiments, the method further comprises, in response to a change of previous seat occupancy state child seat to current seat occupancy state person of a seat when generating the current seat occupancy states of the seats, applying an additional size or age estimation of the detected person based on the output of at least one of the object detectors, the body keypoint module, and the face detector for verifying the current seat occupancy state.

In embodiments, the seat occupancy states comprise subclasses with child and without child for type child seat, wherein the method further comprises, in response to a change of previous seat occupancy state empty seat to current seat occupancy state child seat with subclass with child when generating the current seat occupancy states of the seats, applying a background comparison model comparing a current background seat to a previous background of the seat for verifying the seat occupancy state. In some embodiments, generating the current seat occupancy states of the seats further take information from at least one vehicle sensor into account.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the methods and systems and while these embodiments have been described in considerable detail, it is not the intention of the applicants to restrict or in any way limit the scope of the appended claims to such detail. Additional advantages and modifications will readily appear to those skilled in the art. The described method in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computerized method of determining seat occupancy of a vehicle comprising:
- obtaining an image of a vehicle cabin showing at least one seat of the vehicle;
- determining objects in the image and assigning objects to the at least one seat;
- determining probabilities for seat occupancy states of the at least one seat; and
- determining a seat occupancy state of the at least one seat based on the assigned objects and the probabilities.

2. The method of claim 1, wherein seat occupancy states comprise types person, child seat, object, and empty seat.

3. The method of claim 1 or claim 2, wherein determining probabilities for seat occupancy states comprises determining a bounding box around the seat and classifying the seat occupancy state within the bounding box.

4. The method of any one of claims 1 to 3, wherein determining objects in the image and assigning objects to the at least one seat comprises analyzing the image for detection of objects and classification of object types and outputting bounding boxes for a detected object over time and a confidence value for the classification of the object type.

5. The method of any one of claims 1 to 4, wherein determining objects in the image and assigning objects to the at least one seat comprises determining body keypoints and merging the body keypoints to one or more skeleton models and outputting the skeleton models and a confidence score of a skeleton model based on the number of body keypoints and respective confidence values of the body keypoints.

6. The method of any one of claims 1 to 5, wherein determining objects in the image and assigning objects to the at least one seat comprises analyzing the image for detection of faces and outputting tracked bounding boxes for a detected face over time.

7. The method of any one of claims 1 to 6 wherein determining objects in the image and assigning objects to the at least one seat comprises:
- aggregating different information of a detected object to a combined object; and
- determining seat assignment probabilities of a combined object to the at least one seat in the vehicle, wherein a seat assignment probability reflects the probability of a detected object being located at a seat.

8. The method of any one of claims 1 to 7, wherein determining a seat occupancy state of the at least one seat based on the assigned objects and the probabilities comprises:
- generating seat occupancy states of seats previously being of type person or child seat;
- generating seat occupancy states of seats previously being of type empty seat by adding newly detected persons and/or child seats;
- generating seat occupancy states of seats previously being of type object; and
- generating seat occupancy states of seats previously being of type empty seat by adding newly detected objects.

9. The method of claim 8, wherein generating seat occupancy states of seats previously being of type person or child seat comprises:
- matching previous seat occupancy states of the seats to the seat assignment probabilities for object types person or child seats;
- in response to determining an uncertainty in the matching for a seat, comparing the previous seat occupancy state of the seat with the probabilities for seat occupancy states for the seat; and
- determining confirmed seat states, moved persons and child seats to other seats, and removed persons and child seats based on the matching and/or comparing.

10. The method of claim 8 or 9, wherein generating seat occupancy states of seats previously being of type object comprises:
- matching previous seat occupancy states of the seats to the seat assignment probabilities for object type object; and
- determining confirmed seat states, moved objects to other seats, and removed objects based on the matching.

11. The method of any one of claims 1 to 10 further comprising determining an occlusion value for a seat, wherein the occlusion value is considered when generating the current seat occupancy states of the seats.

12. The method of any one of claims 1 to 11, wherein determining the seat occupancy states of the seats further takes information from at least one vehicle sensor into account.

13. A seat occupancy classification system being adapted to perform the method of any one of the preceding claims.

14. A vehicle comprising:
- a camera for taking images of an interior of the vehicle; and
- the seat occupancy classification system of claim 13.

15. A computer program product comprising instructions, which, when executed on a computer, cause the computer to perform the method any one of claims 1 to 12.
